# EUROPEAN PATENT APPLICATION

(11) **EP 2 439 627 A2**
(43) Date of publication of application: **11.04.2012**
(21) Application number: 11180737.6
(22) Date of filing: 09.09.2011
(51) Int. Cl.: G06F 3/048

(54) **Electronic device having movement-based user input and method**

(30) Priority: 07.10.2010 US 900203
(71) Applicant: Sony Ericsson Mobile Communications AB, 221 88 Lund (SE)
(72) Inventor: Thörn, Ola, 216 12 Limhamn (SE)
(74) Representative: Aurell, Henrik

(57) **Abstract**

To enhance user control of an electronic device (10) in a simple and intuitive way, the electronic device includes a movement-based user input function that is used to invoke display of a menu (24) and selection of a menu item (26) from the menu, whereby the electronic device is moved to control the movement-based user input function.

## Description

### TECHNICAL FIELD OF THE INVENTION

The technology of the present disclosure relates generally to handheld portable electronic devices and, more particularly, to techniques for controlling an electronic device using movement of the electronic device.

### BACKGROUND

Portable electronic devices have a variety of user interfaces, such as keypads, navigation switches, and touch screens. Movement sensors, such as accelerometers, also may be used as a user input. For instance, U.S. Patent No. 6,624,824 describes scrolling through menus by tilting of the electronic device. Other inputs using motion sensors have been used to control games, such as steering a virtual car or airplane by tilting of the electronic device.

### SUMMARY

To enhance user control of an electronic device in a simple and intuitive way, the present disclosure describes a movement-based user input technique for displaying a menu and selecting a menu item from the menu.

According to one aspect of the disclosure a method of controlling a handheld portable electronic device includes displaying content corresponding to an application on a display of the electronic device while the electronic device is maintained in a display viewing position; detecting movement of the electronic device out of the display viewing position and corresponding to a user input command to display a menu on the display of the electronic device; displaying the menu and a pointer on the display, the menu including a plurality of menu items; detecting additional movement of the electronic device and controlling movement of the pointer on the display in coordinated response to the additional movement to highlight one of the menu items by positioning the pointer over the menu item; and detecting a select movement of the electronic device to select the highlighted menu item.

According to one embodiment of the method, the display content is audiovisual content displayed using a media player and the menu items each relate to other items of audiovisual content, and upon detecting the select movement, further including displaying audiovisual content from the selected item of audiovisual content in place of the display content.

According to one embodiment of the method, the menu items each relate to contact entries from a contact list.

According to one embodiment of the method, the display content is content associated with an active application and the menu items each relate to other applications or user interface functions, and upon detecting the select movement, further including switching to the selected application or user interface function and displaying content associated with the selected application or user interface function in place of the display content.

According to one embodiment of the method, the menu items each relate to control functions of an active application and, upon detecting the select movement, further including carrying out the selected control function.

According to one embodiment of the method, the movement of the electronic device to command display of the menu includes movement of the electronic a rate that exceeds a predetermined threshold.

According to one embodiment of the method, the movement of the electronic device to command display of the menu is a turning movement so that one edge of the electronic device moves away from a user at the same rate as or a faster rate than an opposite edge of the electronic device moves toward the user.

According to one embodiment of the method, the menu is displayed along an edge of the display that is adjacent the edge of the electronic device that moves away from the user.

According to one embodiment of the method, the selecting movement is one of a shaking of the electronic device or a movement at a rate that exceeds a predetermined threshold.

According to one embodiment of the method, the menu items are displayed in a virtual three-dimensional space and the additional movement controls movement of the pointer through the virtual three-dimensional space.

According to another aspect of the disclosure a handheld portable electronic device includes a display that displays content corresponding to an application while the electronic device is maintained in a display viewing position; a motion sensor assembly that detects movement of the electronic device; and a control circuit that is configured to analyze movement signals output by the motion sensor assembly and: detect movement of the electronic device out of the display viewing position and that corresponds to a user input command to display a menu on the display of the electronic device; display the menu and a pointer on the display, the menu including a plurality of menu items; detect additional movement of the electronic device and control movement of the pointer on the display in coordinated response to the additional movement to highlight one of the menu items by positioning the pointer over the menu item; and detect a select movement of the electronic device to select the highlighted menu item.

According to one embodiment of the electronic device, the display content is audiovisual content displayed using a media player and the menu items each relate to other items of audiovisual content, and upon detection of the select movement, the control circuit configured to display audiovisual content from the selected item of audiovisual content in place of the display content.

According to one embodiment of the electronic device, the menu items each relate to contact entries from a contact list.

According to one embodiment of the electronic device, the display content is content associated with an active application and the menu items each relate to other applications or user interface functions, and upon detection of the select movement, the control circuit configured to switch to the selected application or user interface function and display content associated with the selected application or user interface function in place of the display content.

According to one embodiment of the electronic device, the menu items each relate to control functions of an active application and, upon detection the select movement, the controller configured to carry out the selected control function.

According to one embodiment of the electronic device, the movement of the electronic device to command display of the menu includes movement of the electronic a rate that exceeds a predetermined threshold.

According to one embodiment of the electronic device, the movement of the electronic device to command display of the menu is a turning movement so that one edge of the electronic device moves away from a user at the same rate as or a faster rate than an opposite edge of the electronic device moves toward the user.

According to one embodiment of the electronic device, the menu is displayed along an edge of the display that is adjacent the edge of the electronic device that moves away from the user.

According to one embodiment of the electronic device, the select movement is one of a shaking of the electronic device or a movement at a rate that exceeds a predetermined threshold.

According to one embodiment of the electronic device, the menu items are displayed in a virtual three-dimensional space and the additional movement controls movement of the pointer through the virtual three-dimensional space.

These and further features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

### BRIEF DESCRIPTION OF THE DRAWINGS

FIG. 1 is a front view of an electronic device during viewing of content associated with an application, the electronic device configured to accept movement-based user input;
FIGs. 2 and 3 show the electronic device of FIG. 1 while carrying out control actions in response to movement-based user input;
FIG. 4 is another front view of the electronic device during viewing of content associated with another application;
FIG. 5 is a side view of the electronic device of FIG. 4;
FIGs. 6 through 8 show the electronic device of FIG. 4 while carrying out control actions in response to movement-based user input; and
FIG. 9 is a schematic block diagram of the electronic device as part of a communication network.

### DETAILED DESCRIPTION OF EMBODIMENTS

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments.

Described below in conjunction with the appended figures are various embodiments of controlling a handheld portable electronic device through movement of the electronic device. In the illustrated embodiments, the electronic device is embodied as a mobile telephone. It will be appreciated that the disclosed techniques may be applied to other operational contexts. Examples of other devices that may be configured to carry out the disclosed techniques include, but are not limited to a camera, a navigation device (commonly referred to as a "**GPS**" or **"GPS** device"), a personal digital assistant (**PDA**), a media player (e.g., an **MP3** player), a gaming device, and a computing device, and especially those computing devices with a highly portable form factor such as an "ultra-mobile PC" or a "tablet" computer.

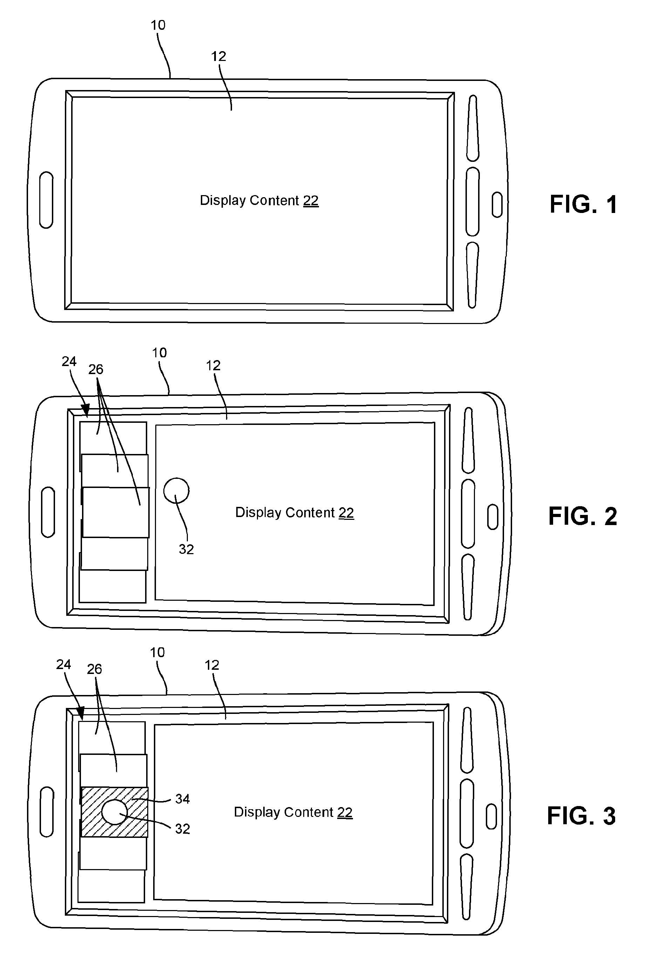

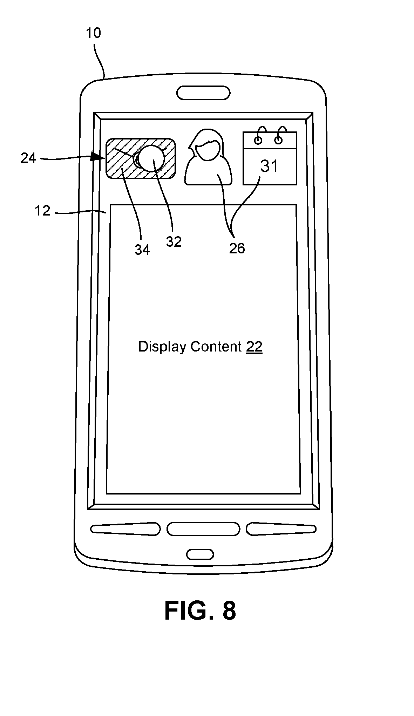

Referring to FIGs. 1 through 9, an electronic device 10 is shown. The illustrated electronic device 10 is a mobile telephone. The electronic device 10 includes a display 12 for displaying displayable content associated with applications 14 that may be executed by the electronic device 10. The applications 14 may include, but are not limited to, a media player for playing video and/or audio, an image viewer for displaying images, an Internet browser, an electronic mail application, an instant messaging application, a text messaging application, a multimedia messaging application, a word processing application or viewer, a spreadsheet application or viewer, a game, an operating system, a camera operation application, a contact list function, a calendar function, and any other application or function that may be executed by the electronic device.

As indicated, the electronic device 10 may be controlled in accordance with user induced movement of the electronic device 10. To sense movement of the electronic device 10, the electronic device 10 may include a motion sensor assembly 16. The motion sensor assembly 16 may include one or more sensors, such as accelerometers, arranged to detect movement along three mutually orthogonal axes. It will be appreciated that the motion sensor assembly 16 and the display 12 are retained by the same housing and that movement of the electronic device 10 is not used to control display output presented on a display of a separate device.

Accelerometers are not the only possible way to implement the motion sensor assembly 16 or detect certain user inputs. Other components that may be used in sensing movements include gyros, magnetometers, force sensors, and the like. Also, a touch screen may be used in combination with motion sensing to detect predetermined user input actions. In other embodiments, a camera that faces the user, such as a camera used for video telephony, may be employed. The camera may generate a video signal of the user and the video signal may be analyzed for face tilt of the user that results from tilting of the electronic device 10 relative to the user and/or analyzed for eye-tracking of the user in conjunction with movement of the electronic device 10.

Output signals from the motion sensor assembly 16 may be input to a control circuit 18 that is configured to interpret and analyze the signals to detect electronic device 10 movement indicative of user control inputs. The control circuit 18 may be further configured to carry out control actions responsive to corresponding movement-based user control inputs. Exemplary user control inputs and corresponding responsive actions will be described below. The movement-based control functionality, including input signal analysis and control operations responsive to the user control inputs, may be embodied in a user input function 20. The user input function 20 may be embodied in the form of executable logic (e.g., lines of code, software, or a program) that is stored on a computer readable medium (e.g., a memory) of the electronic device 10 and executed by the control circuit 18.

With continuing reference to all of the figures, various techniques for controlling the electronic device 10 using movement of the electronic device 10 will be described. The techniques may be thought of as a method that is carried out by the electronic device 10. Variations to the illustrated and described techniques are possible and, therefore, the disclosed embodiments should not be considered the only manner of carrying out electronic device 10 control techniques. Also, while the progression of figures shows a specific order of carrying our control steps, the order may be changed relative to the order shown and/or may be implemented in an object-oriented manner or a state-oriented manner. In addition, two or more operations that are shown in succession may be carried out concurrently or with partial concurrence. In other embodiments, one or more of the operations may be omitted.

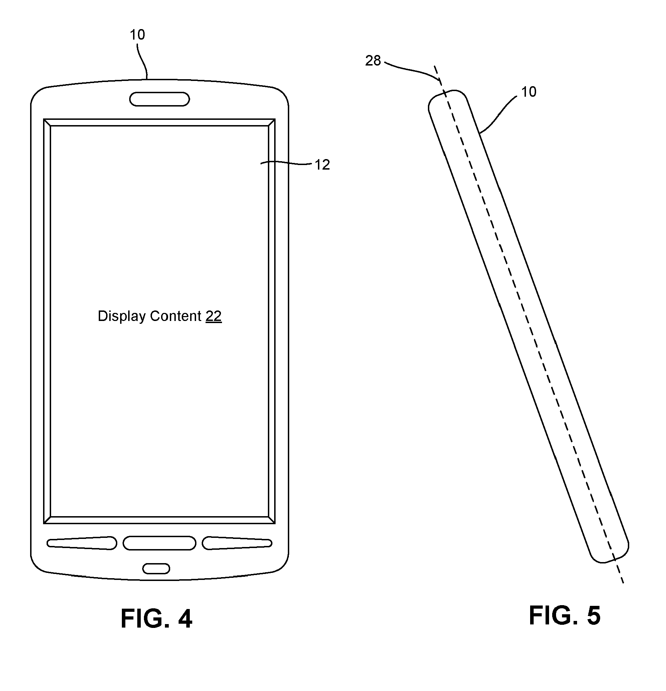

As shown in FIG. 1, the electronic device 10 may be used to display content 22 relating to one of the applications 14 on the display 12. Although not explicitly illustrated, an exemplary embodiment will be described in the context where the displayed content 22 is video from a video file that is stored by the electronic device 10 and rendered for viewing on the display 12 by the electronic device 10 using a media player application. This exemplary context will be described in connection with FIGs. 1-3. Another exemplary context will be described in connection with FIGs. 4-8 and relates to the display of an Internet webpage using an Internet browser.

While viewing of the content, the user may orient the electronic device 10 so that the display 12 is arranged in a comfortable display viewing position (also referred to as a content viewing position or an in-use viewing position). For portable electronic devices, many users will position the electronic device 10 for viewing at a distance of about six inches to about thirty inches from the user and vertically lower than the user's eyes. Also, as shown in FIG. 5, the display viewing position may include orienting the electronic device 10 at an angle so that an upper edge of the electronic device 10 is tilted away from the user so that the display 12 is at an angle of about five degrees to about forty-five degrees from vertical. It will be appreciated that other display viewing positions are possible. For example, while viewing content associated with an active application 14 the display 12 may be oriented vertically, may be oriented at angle that is more than forty-five degrees from vertical, may be oriented horizontally, or may have some other orientation.

Regardless of the exact display viewing position, a detection may be made that the electronic device 10 is being used to view content associated with an active application 14 in the display viewing position. This detection may be made by determining that the electronic device 10 is displaying content associated with one of the applications 14 and is being maintained in a relatively stationary position. The term relatively stationary position includes movement of the electronic device 10 about one or more axes that does not exceed a predetermined movement threshold. The predetermined movement threshold may correspond to a rate of movement, such as movement at a rate of about half a rotation per second. Therefore, when content is displayed for user viewing and movement of the electronic device at or less than the threshold is detected, it may be determined that the electronic device is maintained in the display viewing position. A movement filter may be employed to filter out incidental movements (e.g., movements resulting from jostling of the electronic device 10 while commuting on a train or bus) from triggering detection of a user input.

From the display viewing position, the user may manipulate the electronic device 10 in a predetermined manner that will be interpreted by the user input function 20 as the making of a user input that has a corresponding command to be carried out by the electronic device 10. In one embodiment, the user input corresponds to an input command to display a menu 24 on the display 12. The display of the menu 24 may replace the display of the display content 22 or, as shown in FIGs. 2-3, 6 and 8, may be displayed in addition to the display content 22. Therefore, the user may move the electronic device 10 to cause display of the menu 24. The menu 24 may include a plurality of menu items 26.

Movement to cause display of the menu 24 may include rotating the electronic device 10. In the illustrations of FIGs. 1-3, the electronic device 10 is oriented so that the display 12 has a horizontal orientation and the rotation is so that the left side of the electronic device 10 moves away from the user and the right side of the electronic device 10 moves toward the user. Rotation in other directions may cause display of the menu 24. For instance, rotation so that the right side of the electronic device 10 moves away from the user and the left side of the electronic device 10 moves toward the user may be made. These movements may generally be considered movements about a vertical axis of the electronic device. But the movement of the electronic device 10 need not be perfectly rotated about an axis and/or the axis need not travel through a center or an edge of the electronic device 10 to be considered a rotational movement, a turning movement, a tipping movement, a tilting movement or a pivoting movement.

In the example of FIGs. 1-3, the electronic device 10 may start in the display viewing position while display content 22 is displayed as illustrated in FIG. 1. Then, as shown in FIG. 2, the electronic device 10 is rotated clockwise about its vertical axis, which may also be referred to as a turning to the left. This movement is interpreted as an input command to display the menu 24.

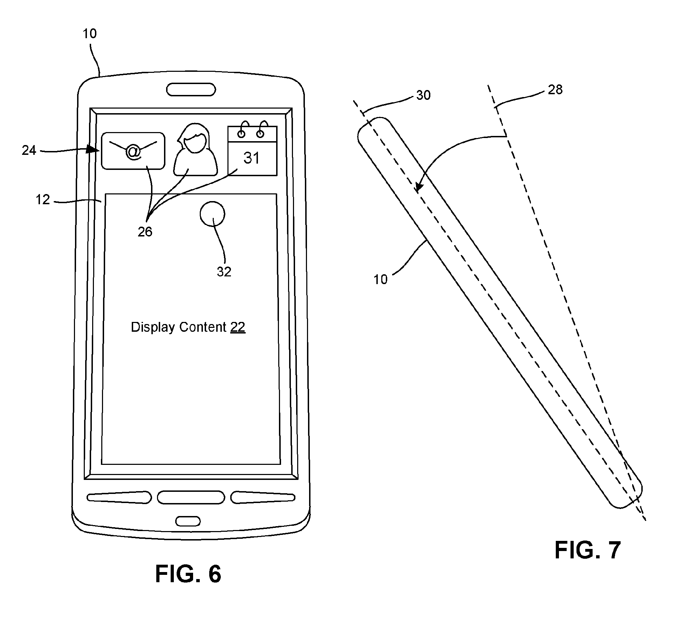

As illustrated in FIGs. 4-8, the rotation may generally be about a horizontal axis of the electronic device 10 and is interpreted as an input command to display the menu 24. Again, the electronic device 10 need not be perfectly rotated about an axis and/or the axis need not travel through a center or an edge of the electronic device 10. In this example, the top edge of the electronic device 10 is moved away from the user and the bottom edge of the electronic device 10 moves toward the user. Also, in this example, the electronic device 10 starts in a display viewing position that has a backward tilt of about twenty degrees from vertical as illustrated by line 28 in FIG. 5. In this example, the movement to invoke displaying of the menu 24 includes tilting to about thirty-five degrees from vertical as illustrated by line 30 in FIG. 7. Rotational-type movement in other directions may cause display of the menu 24. For instance, rotation so that the bottom edge of the electronic device 10 moves away from the user and the top edge of the electronic device 10 moves toward the user may be made.

To be interpreted as an input command to display the menu 24, the movement may be required to exceed a predetermined threshold or be of some other definitive triggering motion. The predetermined threshold may be specified in terms of a rate of movement, a direction of movement or an amount of movement, or a combination of one or more of rate of movement, direction of movement or an amount of movement. For instance, the predetermined threshold may be exceeded if the electronic device 10 is turned at a rotational speed of greater than about 2 rotations per second. It will be appreciated that other speeds are possible and that the electronic device 10 need not make a full rotation to exceed the threshold. In one embodiment, detection of turning at a rate over a predetermined speed and one of travel of one edge of greater than a predetermined distance or turning through a predetermined number of degrees may result in an interpretation that the movement corresponds to a user input to command display the menu 24. Other examples of triggering movements may be a movement that exceeds an absolute threshold (e.g., tilting of a predetermined number of degrees) or a relative threshold (e.g., tilting of a predetermined number of degrees relative to a reference position, such as vertical or the display viewing position).

Other movements, that may or may not include rotation, also may be interpreted as user input to cause display of the menu 24 or cause the carrying out of some other action. For example, one edge may move away from or toward a user while the other edge remains relatively stationary. In some embodiments, however, a translating movement (e.g., movement in the forward, backward, left, right, up, or down directions) or other linear movement may not be considered when detecting user input by movement of the electronic device 10.

The menu items 26 that form part of the menu 24 may be options to carry out tasks available through the currently active application 14 (e.g., application specific commands), and may be related to the display content 22. For example, in the case where the application is a media player, the menu items 26 may be playback control functions such as pause/play, fast forward, rewind, skip ahead, skip back, etc. As another example, in the case where the application is a messaging application, the menu items 26 may be send, reply, forward, delete, select contact, etc. Selection of one of these types of menu items 26 will cause the electronic device 10 to carry out an operation corresponding to the selected menu item 26.

In another embodiment, the menu items 26 that form part of the menu 24 may be files or content feeds (e.g., streaming video or audio) that are available for playback or opening by the currently active application 14 that is associated with the current display content 22. For example, in the case of a media player application, icons for songs, videos or feeds that are available for playback using the media player application may be displayed as the menu items 26. The displayed menu items 26 may be items from a play queue or a play list. An exemplary menu 24 of this nature is shown in connection with FIGs. 1-3 where the display content 22 is video from a video file and the menu items 26 are representations of other video files that are available for playback. As another example, in the case of an image viewer, icons for images that are available for viewing using the image viewer application may be displayed as the menu items 26. As another example for a communications application, the menu items 16 may relate to contacts from a contact list. In one embodiment, the contacts represented in the menu 24 may be a list of most recent contacts or the user's most popular contacts. Similarly, in the case of a word processing application, icons for word processing files that are available for opening using the word processing application may be displayed as the menu items 26. Selection of one of these types of menu items 26 will cause the electronic device 10 to access (e.g., open or playback) content corresponding to the selected menu item 26. The previously displayed content then may be replaced by display content 22 corresponding to the selection, as will be described in greater detail below.

In another embodiment, the menu items 26 that form part of the menu 24 may be icons corresponding to one or more of the applications 14 or other tasks that are related to the overall user interface. Selection of one of these types of menu items 26 will cause the electronic device 10 to carry out the related task. For instance, selection of an application icon will launch the application 14 corresponding to the selected menu item 26 (if not already launched) and display content associated with the application 14 corresponding to the selected menu item 26. In this embodiment, the previously displayed content may be replaced by display content 22 corresponding to the selected application 14. The prior application 14 also may be closed or put in a standby state. An exemplary menu 24 of this nature is shown in connection with FIGs. 4-8 where the display content 22 is content related to an active application. Following the earlier example, the display content 22 may be associated with an Internet browser, such as a webpage, and the menu items 26 are icons representing other applications 14. In the illustrated example, the menu items 26, from left to right, are an icon for an email application, a contacts database and application, and a calendar application. Although not illustrated other menu items may be for any other application 14 available for execution or other general user interface features such as, but not limited to, an event manager, multi-tasking operations, a clipboard feature, etc. As another example function, the movement itself, or a menu item 26, may allow the user to hide sensitive or private information from display. Using this option, the user may quickly secure his or her electronic device 10 from potential on-lookers.

The type of menu items 26 that are displayed as part of the menu 24 may depend on the manner in which the electronic device 10 is moved to input the user command. For example, in the illustrated example of FIG. 2, the electronic device 10 is rotated so that the left side of the electronic device 10 moves away from the user and the menu items 26 are representations (e.g., icons) of video files that are available for playback. If the electronic device 10 is rotated so that the right side of the electronic device 10 moves away from the user, playback control options or other application specific commands may be displayed.

In one embodiment, the menu 24 is displayed in a location on the display 12 that corresponds with the movement to invoke display of the menu 24. In the illustrated embodiments, for example, the menu 24 is displayed along an edge of the display that is adjacent the edge of the electronic device 10 that moved away from the user to invoke the display of the menu 24. When the menu 24 is displayed, the display content 22 may be reduced in size and remain displayed on the display 22 next to the menu 24. In other embodiments, the display content 22 may be removed from the display 12 or shown in a faded form, or the menu 24 may be superimposed on the display content 24.

In addition to displaying the menu 24, the electronic device 10 may display a pointer 32 (sometimes referred to as a cursor) when detection of the movement to initiate display of the menu 24 is made. The pointer 32 may be moved by the user to highlight one of the menu items 26. The pointer 32 may be moved by rocking and moving the electronic device 10 in a manner similar to the way a movement-based game controller might be used to move an object in a displayed game scenario. In one embodiment, the pointer 32 may react to movement of the electronic device 10 similar to the manner in which a ball would roll on a surface if the surface were moved, but with a movement rate control to avoid "overshooting" a desired location on the display 12.

In other embodiments, the menu 24 and the menu items 26 may be displayed in a manner that gives a three dimensional (3D) appearance to the user interface. The additional movement of the electronic device 10 highlight a desired one of the menu items 26 may control movement of the pointer 32 through this virtual 3D space. The display of the menu items 26 and the movement-based input controls may be adjusted in this 3D mode to accommodate viewing angle of the user and/or limitations in viewing angle of the display 12.

The user may position the pointer 32 over a desired one of the menu items 26 by manipulating the electronic device 10 to cause coordinated movement of the pointer 32 to the location of the intended menu item 26. When the pointer 32 is positioned over a menu item 26, the menu item 26 may become a highlighted menu item 34. Highlighting of the menu item may cause a change in appearance of the menu item, such as placing a background or halo around the menu item, or changing the color or brightness of the menu item. The highlighting of the menu item 26 to establish the highlighted menu item 34 provides visual feed back to the user that the highlighted menu item 34 is ready for selection. Haptic feedback also may be used.

Selection of the highlighted menu item 34 may occur by a predetermined type of movement of the electronic device 10. In one embodiment, the movement to select a highlighted menu item 34 is a shaking or jerking of the electronic device 10. The selection movement may be detected, for example, if the electronic device 10 moves at above a predetermined rate and/or moves and reverses direction one or more times within a predetermined amount of time.

Selection of one of the menu items 26 will cause an appropriate response by the electronic device 10. For example, when the selected menu item 26 is an option to carry out a task available through the currently active application 14 (e.g., an application specific command), the corresponding task will be undertaken by the electronic device. When the selected menu item 26 is an icon for a file or a content feed, the selected file or content feed will be accessed. In this case, the display content 22 may be replaced by display content 22 associated with the corresponding file or content feed. When the selected menu item 26 is an icon corresponding an application 14, the selected application 14 may be launched (if not already) and the display content 22 may be replaced by display content 22 associated with the corresponding application 14. Additionally, after selection of a menu item 26, the menu 24 may be removed from the display 12 and the region of the display 12 that is used to display the display content 22 may be restored to the size and placement used before display of the menu 24 and before any associated resizing and/or repositioning of the display content 22 to accommodate the menu 24.

With continuing reference to the figures, the electronic device 10 may include user inputs other than movement-based inputs. For example, user input devices 36 such as a touch screen and buttons may be present. The user inputs 36 may be used independently of movement-based control techniques and/or in conjunction with movement-based control techniques.

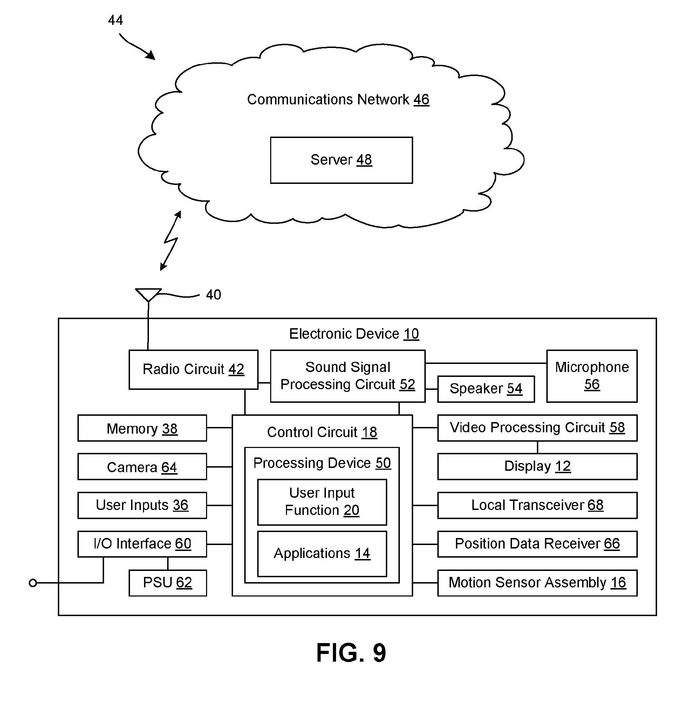

With continuing reference to FIG. 9, the electronic device 10 may include communications circuitry that enables the electronic device 10 to establish communication with another device. Communications may include voice calls, video calls, data transfers, and the like. Communications may occur over a cellular circuit-switched network or over a packet-switched network (e.g., a network compatible with IEEE 802.11, which is commonly referred to as WiFi, or a network compatible with IEEE 802.16, which is commonly referred to as WiMAX). Data transfers may include, but are not limited to, receiving streaming content, receiving data feeds, downloading and/or uploading data (including Internet content), receiving or sending messages (e.g., text messages, instant messages, electronic mail messages, multimedia messages), and so forth. This data may be processed by the electronic device 10, including storing the data in a memory 38, executing applications to allow user interaction with the data, displaying video and/or image content associated with the data, outputting audio sounds associated with the data, and so forth.

In the exemplary embodiment, the communications circuitry may include an antenna 40 coupled to a radio circuit 42. The radio circuit 42 includes a radio frequency transmitter and receiver for transmitting and receiving signals via the antenna 40. The radio circuit 42 may be configured to operate in a mobile communications system 44. Radio circuit 42 types for interaction with a mobile radio network include, but are not limited to, global system for mobile communications (GSM), code division multiple access (CDMA), wideband CDMA (WCDMA), general packet radio service (GPRS), WiFi, WiMAX, integrated services digital broadcasting (ISDB), high speed packet access (HSPA), etc., as well as advanced versions of these standards or any other appropriate standard. It will be appreciated that the electronic device 10 may be capable of communicating using more than one standard. Therefore, the antenna 40 and the radio circuit 42 may represent one or more than one radio transceiver.

The system 44 may include a communications network 46 having a server 48 (or servers) for managing calls placed by and destined to the electronic device 10, transmitting data to and receiving data from the electronic device 10, and carrying out any other support functions. The server 48 communicates with the electronic device 10 via a transmission medium. The transmission medium may be any appropriate device or assembly, including, for example, a communications base station (e.g., a cellular service tower, or "cell" tower), a wireless access point, a satellite, etc. The network 46 may support the communications activity of multiple electronic devices 10 and other types of end user devices. As will be appreciated, the server 48 may be configured as a typical computer system used to carry out server functions and may include a processor configured to execute software containing logical instructions that embody the functions of the server 48 and a memory to store such software. In alternative arrangements, the electronic device 10 may wirelessly communicate directly with another electronic device (e.g., another mobile telephone or a computer) and without an intervening network.

As indicated, the electronic device 10 may include the primary control circuit 18 that is configured to carry out overall control of the functions and operations of the electronic device 10. The control circuit 18 may include a processing device 50, such as a central processing unit (CPU), microcontroller or microprocessor. The processing device 50 executes code stored in a memory (not shown) within the control circuit 18 and/or in a separate memory, such as the memory 38, in order to carry out operation of the electronic device 10. The memory 38 may be, for example, one or more of a buffer, a flash memory, a hard drive, a removable media, a volatile memory, a non-volatile memory, a random access memory (RAM), or other suitable device. In a typical arrangement, the memory 38 may include a non-volatile memory for long term data storage and a volatile memory that functions as system memory for the control circuit 18. The memory 38 may exchange data with the control circuit 18 over a data bus. Accompanying control lines and an address bus between the memory 18 and the control circuit 18 also may be present.

The electronic device 10 further includes a sound signal processing circuit 52 for processing audio signals. Coupled to the sound processing circuit 52 are a speaker 54 and a microphone 56 that enable a user to listen and speak via the electronic device 10, and hear sounds generated in connection with other functions of the device 10. The sound processing circuit 52 may include any appropriate buffers, encoders, decoders, amplifiers and so forth.

The display 12 may be coupled to the control circuit 18 by a video processing circuit 58 that converts video data to a video signal used to drive the display 12. The video processing circuit 58 may include any appropriate buffers, decoders, video data processors and so forth.

The electronic device 10 may further include one or more input/output (I/O) interface(s) 60. The I/O interface(s) 60 may be in the form of typical mobile telephone I/O interfaces and may include one or more electrical connectors for operatively connecting the electronic device 10 to another device (e.g., a computer) or an accessory (e.g., a personal handsfree (PHF) device) via a cable. Further, operating power may be received over the I/O interface(s) 60 and power to charge a battery of a power supply unit (PSU) 62 within the electronic device 10 may be received over the I/O interface(s) 60. The PSU 62 may supply power to operate the electronic device 10 in the absence of an external power source.

The electronic device 10 also may include various other components. For instance, a camera 64 may be present for taking digital pictures and/or movies. Image and/or video files corresponding to the pictures and/or movies may be stored in the memory 38. A position data receiver 66, such as a global positioning system (GPS) receiver, may be involved in determining the location of the electronic device 10. A local transceiver 68, such as an infrared transceiver and/or an RF transceiver (e.g., a Bluetooth chipset) may be used to establish communication with a nearby device, such as an accessory (e.g., a PHF device), another mobile radio terminal, a computer or another device.

Although certain embodiments have been shown and described, it is understood that equivalents and modifications falling within the scope of the appended claims will occur to others who are skilled in the art upon the reading and understanding of this specification.

## Claims

1. A method of controlling a handheld portable electronic device (10), comprising:
displaying content (22) corresponding to an application on a display (12) of the electronic device while the electronic device is maintained in a display viewing position;
detecting movement of the electronic device out of the display viewing position and corresponding to a user input command to display a menu on the display of the electronic device;
displaying the menu (24) and a pointer (32) on the display, the menu including a plurality of menu items (26);
detecting additional movement of the electronic device and controlling movement of the pointer on the display in coordinated response to the additional movement to highlight one of the menu items by positioning the pointer over the menu item; and
detecting a select movement of the electronic device to select the highlighted menu item.

2. The method of claim 1, wherein the display content is one of:
audiovisual content displayed using a media player and the menu items each relate to other items of audiovisual content, and upon detecting the select movement, the method further comprising displaying audiovisual content from the selected item of audiovisual content in place of the display content; or
content associated with an active application and the menu items each relate to other applications or user interface functions, and upon detecting the select movement, the method further comprising switching to the selected application or user interface function and displaying content associated with the selected application or user interface function in place of the display content.

3. The method of claim 1, wherein the menu items each relate to one of:
contact entries from a contact list; or
control functions of an active application and, upon detecting the select movement, the method further comprising carrying out the selected control function.

4. The method of any one of claims 1-3, wherein the movement of the electronic device to command display of the menu includes movement of the electronic a rate that exceeds a predetermined threshold.

5. The method of any one of claims 1-4, wherein the movement of the electronic device to command display of the menu is a turning movement so that one edge of the electronic device moves away from a user at the same rate as or a faster rate than an opposite edge of the electronic device moves toward the user.

6. The method of claim 5, wherein the menu is displayed along an edge of the display that is adjacent the edge of the electronic device that moves away from the user.

7. The method of any one of claims 1-6, wherein the selecting movement is one of a shaking of the electronic device or a movement at a rate that exceeds a predetermined threshold.

8. The method of any one of claims 1-7, wherein the menu items are displayed in a virtual three-dimensional space and the additional movement controls movement of the pointer through the virtual three-dimensional space.

9. A handheld portable electronic device (10), comprising:
a display (12) that displays content (22) corresponding to an application while the electronic device is maintained in a display viewing position;
a motion sensor assembly (16) that detects movement of the electronic device; and
a control circuit (18) that is configured to analyze movement signals output by the motion sensor assembly and:
detect movement of the electronic device out of the display viewing position and that corresponds to a user input command to display a menu on the display of the electronic device;
display the menu (24) and a pointer (32) on the display, the menu including a plurality of menu items (26);
detect additional movement of the electronic device and control movement of the pointer on the display in coordinated response to the additional movement to highlight one of the menu items by positioning the pointer over the menu item; and
detect a select movement of the electronic device to select the highlighted menu item.

10. The electronic device of claim 9, wherein the display content is one of:
audiovisual content displayed using a media player and the menu items each relate to other items of audiovisual content, and upon detection of the select movement, the control circuit configured to display audiovisual content from the selected item of audiovisual content in place of the display content; or
content associated with an active application and the menu items each relate to other applications or user interface functions, and upon detection of the select movement, the control circuit configured to switch to the selected application or user interface function and display content associated with the selected application or user interface function in place of the display content.

11. The electronic device of claim 9, wherein the menu items each relate to one of:
contact entries from a contact list; or
control functions of an active application and, upon detection the select movement, the controller configured to carry out the selected control function.

12. The electronic device of any one of claims 9-11, wherein the movement of the electronic device to command display of the menu includes movement of the electronic a rate that exceeds a predetermined threshold.

13. The electronic device of any one of claims 9-12, wherein the movement of the electronic device to command display of the menu is a turning movement so that one edge of the electronic device moves away from a user at the same rate as or a faster rate than an opposite edge of the electronic device moves toward the user.

14. The electronic device of any one of claims 9-13, wherein the select movement is one of a shaking of the electronic device or a movement at a rate that exceeds a predetermined threshold.

15. The electronic device of any one of claims 9-14, wherein the menu items are displayed in a virtual three-dimensional space and the additional movement controls movement of the pointer through the virtual three-dimensional space.
